# EUROPÄISCHE PATENTSCHRIFT

(11) **EP 0 998 536 B1**
(45) Veröffentlichungstag und Bekanntmachung des Hinweises auf die Patenterteilung: **18.12.2002**
(21) Anmeldenummer: 98945017.6
(22) Anmeldetag: 21.07.1998
(51) Int. Cl.: C09G 1/02, C09K 3/14

(54) **POLIERMITTEL FÜR HALBLEITERSUBSTRATE**
POLISHING AGENT FOR SEMICONDUCTOR SUBSTRATES
PRODUIT DE POLISSAGE POUR SUBSTRATS SEMI-CONDUCTEURS

(30) Priorität: 25.07.1997 DE 19732121
(43) Veröffentlichungstag der Anmeldung: 10.05.2000
(73) Patentinhaber: Infineon Technologies AG, 81669 München (DE)
(72) Erfinder: BRADL, Stephan, D-01157 Dresden (DE); HEITZSCH, Olaf, D-01640 Coswig (DE)
(74) Vertreter: Fischer, Volker, Dipl.-Ing.
(86) Internationale Anmeldenummer: DE9802050
(87) Internationale Veröffentlichungsnummer: WO99005232

(56) Entgegenhaltungen:
- EP-A- 0 745 656
- DE-C- 19 520 614
- US-A- 5 382 272
- DATABASE INSPEC INSTITUTE OF ELECTRICAL ENGINEERS, STEVENAGE, GB Inspec No. 5406790, SCHAFFER W J ET AL: "BPSG improves CMP performance for deep submicron ICs" XP002088822 & SEMICONDUCTOR INTERNATIONAL, JULY 1996, CAHNERS PUBLISHING, USA, Bd. 19, Nr. 8, Seiten 205-206, 208, 210, 212, ISSN 0163-3767

## Beschreibung

Die Erfindung betrifft ein Poliermittel mit einer Lösung und mit in der Lösung suspendierten Polierkörnern sowie die Verwendung dieses Poliermittels zum Planarisieren eines Halbleitersubstrats.

Ein in der Sub-0,5 µm-Technologie verwendetes Planarisierungsverfahren ist das chemisch-mechanische Polieren (CMP). Es kann entweder als chemisch unterstütztes mechanisches Polieren oder als durch mechanische Einwirkung unterstütztes chemisches Naßätzen aufgefaßt werden. Das Poliermittel enthält neben den Polierkörnern (Abrasive) auch aktive chemische Zusätze. Die chemischen Zusätze begünstigen ein selektives Abtragen bestimmter Schichten auf den Halbleiterscheiben. Sie werden auf das abzutragende Schichtmaterial abgestimmt. Die Polierkörner bestehen aus Siliziumdioxid (SiO₂), Aluminiumoxid (Al₂O₃) oder Ceroxid (Ce₂O₃).

Es hat sich gezeigt, daß bei der Verwendung harter Polierkörner für die Bearbeitung von vergleichsweise weichen Schichten Mikrokratzer entstehen können. Zur Lösung dieses Problems ist es bekannt, die Härte der Polierkörner dadurch zu variieren, daß die Substanzen, aus denen sie bestehen, in einer weicheren Phase verwendet werden.

So weist beispielsweise Aluminiumoxid (Al₂O₃) eine harte hexagonale α-Phase (Korund) und eine weiche kubische γ-Phase (Tonerde) auf. Von Siliziumdioxid (SiO₂) sind sogar acht verschiedene Modifikationen bekannt: Quarz, Cristobalit, Tridymit, Coesit, Stishovit, Keatit, Melanophlogit und faseriges Siliziumdioxid. All diese Materialien weisen jeweils eine definierte Härte und Dichte auf. Die Variationsmöglichkeiten der Härte der verwendeten Polierkörner sind durch die Auswahl der zur Verfügung stehenden Modifikationen eingeschränkt. Dies erlaubt kein kontinuierliches Eigenschaftsspektrum. Eine Anpassung des Schleifprozesses an die Härte und Beschaffenheit des zu planarisierenden Materials ist daher nur mit Einschränkungen möglich.

Der Erfindung liegt die Aufgabe zugrunde, ein gattungsgemäßes Poliermittel so auszustatten, daß die Nachteile des Standes der Technik vermieden werden. Insbesondere soll das Poliermittel bei einer möglichst hohen Abtragsrate die Entstehung von Mikrokratzern vermeiden.

Diese Aufgabe wird dadurch gelöst, daß die Polierkörner im wesentlichen aus einer ersten Substanz mit einer Glasübergangstemperatur T_{G} bestehen, und daß die Polierkörner einen Dotierstoff enthalten, wobei die Konzentration des Dotierstoffes so festgelegt ist, daß die Glasübergangstemperatur T_{G}' der dotierten Substanz geringer ist als die Glasübergangstemperatur T_{G} der undotierten ersten Substanz.

Die Erfindung sieht also vor, durch die gezielte Zugabe von einem oder mehreren Stoffen die Substanz, aus der die Polierkörner bestehen, so zu verändern, daß ihre Glasübergangstemperatur sinkt. Dies hat zur Folge, daß die Substanz weicher wird.

Für Teilchen im Größenbereich der Abrasive mit einem Durchmesser zwischen 50 und 500 nm kann eine makroskopische Größe wie die Härte nicht mehr sinnvoll angewendet werden. Es hat sich dennoch gezeigt, daß die für den Schleifprozeß relevante Härte monoton von der Glasübergangstemperatur abhängt.

Besonders zweckmäßig ist es, die Zugabe der Dotierstoffe so zu begrenzen, daß ein Phasenübergang der ersten Substanz vermieden wird. In diesem Fall führt die Zugabe des Dotierstoffes lediglich zu einer geringen Strukturänderung der ersten Substanz, nicht hingegen jedoch zu einem Phasenübergang.

Die Zugabe des Dotierstoffes führt dazu, daß die Fernordnung und damit die Kristallstruktur geschwächt wird. Durch die Variation der Dotierstoffkonzentration kann auf diese Weise der Härtegrad der Polierkörner exakt abgestimmt werden. Ein Übergang in den Glaszustand ist für dieses Weicherwerden nicht erforderlich.

Auch wenn ein Übergang in den Glaszustand für die gewünschte Erweichung der Polierkörner nicht erforderlich ist, so bildet doch die Glasübergangstemperatur ein Kriterium, anhand dessen sich geeignete weiche Zusammensetzungen ermitteln lassen. Mit Glassübergangstemperatur ist hier die ideale Glasübergangstemperatur gemeint, d.h. jene Temperatur, bei der bei einer unendlich langsamen Abkühlung ein Übergang in den Glaszustand erfolgen würde. Thermodynamisch ist diese Temperatur T_{G} dadurch gekennzeichnet, daß bei ihr die Entropie S_{Glas}(T) größer ist als die Entropie S_{Kristall} (T). Erfindungsgemäß kommt es also nicht auf den Glasübergang als solchen an, da auch eine auf die zuvor beschriebene Weise modifizierte Kristallstruktur der Anforderung, gezielt weicher zu sein, genügen kann.

Eine obere Grenze für die Zugabe von Dotierstoffen bilden jene Konzentrationen, bei denen die Gefahr der Phasenseparation (Ausblühen) bzw. der invertierten Viskosität (d.h. das System A dotiert mit System B geht über in das System B dotiert mit System A) besteht.

Um eine technisch bedeutende Änderung des Polierverhaltens zu erzielen, ist es zweckmäßig, die Konzentration des Dotierstoffes so festzulegen, daß die Glasübergangstemperatur gegenüber der undotierten Substanz um wenigstens 10 % abgesenkt wird.

Vorteilhafterweise ist die erste Substanz der Polierkörner ein Oxid eines Metalls oder Halbmetalls. Besonders zweckmäßig ist es, wenn die erste Substanz aus einem der bekannten Materialien für Polierkörner wie SiO₂, Al₂O₃ oder Ce₂O₃ besteht. Das Abtragsverhalten dieser Substanzen ist ebenso wie ihr Zusammenwirken mit im Poliermittel enthaltenen chemischen Zusätzen bekannt. Da durch die Zugabe des Dotierstoffs z.B. wenigstens eines Elements aus der Gruppe B, P, As, Sb, Si, Al, die Kristallstruktur abgesehen von ihrer Schwächung erhalten bleibt, verändert sich die Wechselwirkung in dem Gesamtsystem, das aus der zu bearbeitenden Schicht, dem Lösungsmittel und den darin enthaltenen Zusätzen und den Polierkörnern besteht, nur dahingehend, daß durch das Weicherwerden der Polierkörner die Entstehung von Mikrokratzern verhindert wird. Eine Anpassung der übrigen Parameter des planaren Polierprozesses kann vermieden werden. Eine vollständige Neuentwicklung des Polierprozesses ist somit nicht nötig. Daher besteht für ein entsprechend aufgebautes Poliermittel ein hohes Potential für die Verwendung in einem chemisch-mechanischen Polierverfahren.

Durch technologische beziehungsweise physikalische und chemische Randbedingungen ist die Auswahl geeigneter Substanzen als erste Substanz für das Abrasiv eingeschränkt. Die Zugabe eines oder mehrerer Dotierstoffe erlaubt die Anpassung der Härte des Abrasivs an das jeweils zu polierende Substrat ohne daß ein Wechsel des Abrasivs notwendig ist.

Erfindungsgemäß können die dargestellten Poliermittel zum mikrokratzerfreien Planarisieren von Halbleitersubstraten oder von auf ihnen aufgebrachten Schichten verwendet werden.

Besonders vorteilhaft ist es, diese Verwendung des Poliermittels in einem Verfahren zum Planarisieren eines Halbleitersubstrates so auszugestalten, daß die erste Substanz so hart ist, daß bei ihrer Verwendung im undotierten Zustand Mikrokratzer in den auf dem Halbleitersubstrat liegenden Schichten oder im Halbleitersubstrat selbst entstehen, und das die Konzentration des Dotierstoffes so hoch gewählt ist, daß im dotierten Zustand keine Kratzer in den Schichten oder im Halbleitersubstrat entstehen.

Bei dieser speziellen Verwendung kann die Härte des Poliermittels exakt auf die Härte und Beständigkeit des zu bearbeitenden Halbleitersubstrats angepaßt werden.

Weitere Vorteile und Besonderheiten der Erfindung ergeben sich aus den Unteransprüchen und der nachfolgenden Beschreibung bevorzugter Ausführungsbeispiele anhand der Zeichnungen.

Von den Zeichnungen zeigt
- **Fig. 1**: den Zusammenhang zwischen der Glasübergangstemperatur und dem Schmelzpunkt und
- **Fig. 2**: den Zusammenhang zwischen dem Schmelzpunkt und der Härte der Polierkörner.

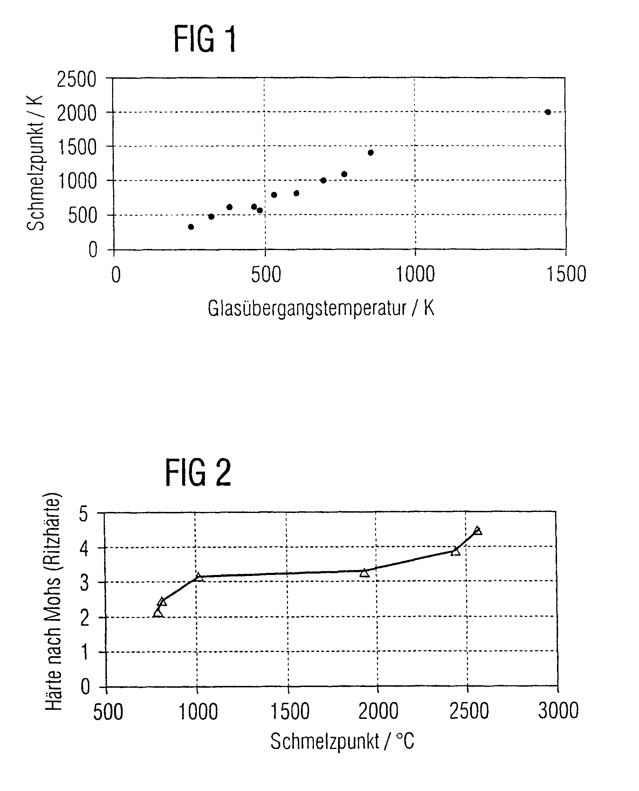

Der in **Fig. 1** dargestellte Zusammenhang zwischen der Glasübergangstemperatur und dem Schmelzpunkt ergibt sich aus der nachfolgenden Tabelle 1:

| | Glasübergangstemperatur [K] | Schmelzpunkt [K] |
|---|---|---|
| S | 246 | 342 |
| Se | 318 | 490 |
| As₂Te₃ | 379 | 633 |
| ZnCl₂ | 380 | 590 |
| As₂Se₃ | 468 | 633 |
| As₂S₃ | 478 | 573 |
| B₂O₃ | 530 | 793 |
| BeF₂ | 598 | 821 |
| GeSe | 695 | 980 |
| GeS₂ | 765 | 1073 |
| GeO₂ | 853 | 1388 |
| SiO₂ | 1453 | 2003 |

In **Fig. 1** ist ein monotoner Anstieg des Schmelzpunktes mit der Glasübergangstemperatur für die aufgeführten Substanzen erkennbar.

In **Fig. 2** ist die Ritzhärte nach Mohs in Abhängigkeit des Schmelzpunktes dargestellt. Die Werte sind der folgenden Tabelle 2 entnommen:

| | Schmelzpunkt [K] | Härte nach Mohs (Ritzhärte) |
|---|---|---|
| KCl | 770 | 2,2 |
| NaCl | 800 | 2,5 |
| NaF | 992 | 3,2 |
| BaO | 1925 | 3,3 |
| SrO | 2430 | 3,9 |
| CaO | 2570 | 4,5 |
| MgO | 2642 | 6,5 |

Der in **Fig. 2** dargestellte Zusammenhang zwischen Schmelzpunkt und Ritzhärte zeigt einen monotonen Anstieg der Ritzhärte mit dem Schmelzpunkt.

Somit ergibt sich auch ein monotoner Anstieg der Härte mit steigender Glasübergangstemperatur.

Die Abnahme der Glasübergangstemperatur durch die Zugabe von Dotierstoffen ergibt sich am Beispiel von PSG (Phosphorsilikatglas) und BPSG (Borphosphorsilikatglas) gemäß der nachfolgenden Tabelle 3:

| | Zusammensetzung | | Glasübergangstemperatur T_{G} |
|---|---|---|---|
| | Massen % B₂O₃ | Massen % P₂O₅ | |
| PSG | | | 800 |
| BPSG-A | 11,9 | 4,2 | 645 |
| BSG | 18,9 | | 515 |
| PSG | | 7,5 | 750 |
| PSG | | 6,9 | 725 |

Die Darstellung von für das Poliermittel geeigneten kolloidalen Systeme wird nachfolgend am Beispiel von SiO₂ als erster Substanz der Polierkörner erläutert. Selbstverständlich ist es gleichermaßen möglich, diese Verfahren mit anderen ersten Substanzen und anderen Dotierstoffen durchzuführen.

Die Herstellung von kolloidalem SiO₂ mit einem Dotierstoff ist durch verschiedene Methoden möglich.

Bei einem pyrogenen Verfahren läßt man ein SiCl₄ / AlCl₃ - Gemisch in einer Knallgasflamme reagieren und hydrolisiert dann die Reaktionsprodukte. Bei den bei diesem Verfahren entstehenden Mischoxiden wird Aluminiumoxid Al₂O₃ als Dotierstoff in die Primärstruktur des Wirtsoxides Siliziumdioxid SiO₂ eingebaut. Der Einbau anderer Dotierstoffe wie zum Beispiel Bor oder Phosphor ist entsprechend über die Reaktion von SiCl₄ mit BCl₃ oder PCl₅ möglich.

Eine andere Möglichkeit der Herstellung von kolloidalem SiO₂ ist die Entalkalisierung von Wasserglas. Hierbei kondensieren Orthokieselsäuremoleküle um sphärische SiO₂-Aggregate mit einem Durchmesser von 50 bis 500 nm zu bilden. Wenn bei dieser Kondensation die Dotierstoffe in einer Verbindung wie (NH₄)₂HPO₄ oder H₃BO₄ in entsprechendem Verhältnis und pH-Wert beigegeben werden, ist gleichfalls ein Einbau des Dotierstoffes in die Primärstruktur des Wirtsoxides möglich.

## Patentansprüche

1. Poliermittel mit einer Lösung und mit in der Lösung suspendierten Polierkörnern,
**dadurch gekennzeichnet,**
- **daß** die Polierkörner im wesentlichen aus einer ersten Substanz mit einer Glasübergangstemperatur T_{G} bestehen,
- und **daß** die Polierkörner einen Dotierstoff enthalten,
- wobei die Konzentration des Dotierstoffes so festgelegt ist, daß die Glasübergangstemperatur T_{G}' der dotierten Substanz geringer ist als die Glasübergangstemperatur T_{G} der undotierten ersten Substanz.

2. Poliermittel nach Anspruch 1, **dadurch gekennzeichnet, daß** die Konzentration des Dotierstoffes so festgelegt ist, daß die Glasübergangstemperatur T_{G}' um wenigstens 10 % gegenüber der Glasübergangstemperatur T_{G} der undotierten Substanz abgesenkt wird.

3. Poliermittel nach einem der Ansprüche 1 oder 2, **dadurch gekennzeichnet, daß** die erste Substanz ein Oxid eines Metalls oder Halbmetalls ist.

4. Poliermittel nach Anspruch 3, **dadurch gekennzeichnet, daß** die erste Substanz SiO₂, Al₂O₃ oder Ce₂O₃ ist.

5. Poliermittel nach einem der Ansprüche 1 bis 4, **dadurch gekennzeichnet, daß** der Dotierstoff wenigstens ein Element aus der Gruppe B, P, As, Sb, Si, Al enthält.

6. Poliermittel nach einem der Ansprüche 1 bis 5, **dadurch gekennzeichnet, daß** der Durchmesser der Polierkörner 50 bis 500 nm beträgt.

7. Verwendung eines Poliermittels nach einem der Ansprüche 1 bis 6 zum mikrokratzerfreien Planarisieren eines Halbleitersubstrats oder von auf dem Halbleitersubstrat aufgebrachten Schichten.

8. Verwendung eines Poliermittels nach Anspruch 7, **dadurch gekennzeichnet, daß** die erste Substanz so hart ist, daß bei ihrer Verwendung im undotierten Zustand Mikrokratzer im Halbleitersubstrat entstehen, und daß die Konzentration des Dotierstoffes so hoch gewählt ist, daß im dotierten Zustand keine Kratzer im Halbleitersubstrat entstehen.

## Claims

1. Polishing agent with a solution and with polishing grains suspended in the solution, **characterized in that**,
- the polishing grains consist essentially of a first substance with a glass transition temperature T_{G},
- and **in that** the polishing grains contain a dopant,
- the concentration of the dopant being set so that the glass transition temperature T_{G}' of the doped substance is lower than the glass transition temperature T_{G} of the undoped first substance.

2. Polishing agent according to Claim 1, **characterized in that** the concentration of the dopant is set so that the glass transition temperature T_{G}' is lowered by at least 10% in relation to the glass transition temperature T_{G} of the undoped substance.

3. Polishing agent according to Claim 1 or 2, **characterized in that** the first substance is an oxide of a metal or semimetal.

4. Polishing agent according to Claim 3, **characterized in that** the first substance is SiO₂, Al₂O₃ or Ce₂O₃.

5. Polishing agent according to one of Claims 1 to 4, **characterized in that** the dopant contains at least one element from the group B, P, As, Sb, Si, Al.

6. Polishing agent according to one of Claims 1 to 5, **characterized in that** the diameter of the polishing grains is from 50 to 500 nm.

7. Use of a polishing agent according to one of Claims 1 to 6 for the microscratch-free planarizing of a semiconductor substrate or of layers applied on the semiconductor substrate.

8. Use of a polishing agent according to Claim 7, **characterized in that** the first substance is so hard that, when it is used in the undoped state, microscratches are created in the semiconductor substrate, and **in that** the concentration of the dopant is selected to be high enough for no scratches to be created in the semiconductor substrate in the doped state.

## Revendications

1. Agent de polissage comprenant une solution et des grains de polissage en suspension dans la solution,
**caractérisé**
- **en ce que** les grains de polissage sont constitués essentiellement d'une première substance ayant un point T_{G} de transition à l'état vitreux,
- et **en ce que** les grains de polissage contiennent une substance de dopage,
- la concentration de la substance de dopage étant fixée de façon à ce que le point T_{G}' de transition à l'état vitreux de la substance dopée soit plus petit que le point T_{G} de transition à l'état vitreux de la première substance non dopée.

2. Agent de polissage suivant la revendication 1, **caractérisé en ce que** la concentration de la substance de dopage est fixée de façon à ce que le point T_{G}' de transition à l'état vitreux soit abaissé d'au moins 10 % par rapport au point T_{G} de transition à l'état vitreux de la substance non dopée.

3. Agent de polissage suivant l'une des revendications 1 ou 2, **caractérisé en ce que** la première substance est un oxyde d'un métal ou d'un métalloïde.

4. Agent de polissage suivant la revendication 3, **caractérisé en ce que** la première substance est SiO₂, Al₂O₃ ou Ce₂O₃.

5. Agent de polissage suivant l'une des revendications 1 à 4, **caractérisé en ce que** la substance de dopage contient au moins un élément choisi dans le groupe constitué de B, P, As, Sb, Si, Al.

6. Agent de polissage suivant l'une des revendications 1 à 5, **caractérisé en ce que** le diamètre des grains de polissage est compris entre 50 et 500 nm.

7. Utilisation d'un agent de polissage suivant l'une des revendications 1 à 6 pour donner de la planéité sans rayures microscopiques à un substrat semi-conducteur ou à des couches déposées sur le substrat semi-conducteur.

8. Utilisation d'un agent de polissage suivant la revendication 7, **caractérisée en ce que** la première substance est si dure qu'il se crée, lors de son utilisation à l'état non dopé, des rayures microscopiques dans le substrat semi-conducteur et **en ce que** la concentration de la substance de dopage est choisie si grande qu'il ne se crée pas à l'état dopé de rayures dans le substrat semi-conducteur.
